# EUROPÄISCHE PATENTSCHRIFT

(11) **EP 2 095 051 B1**
(45) Veröffentlichungstag und Bekanntmachung des Hinweises auf die Patenterteilung: **19.01.2011**
(21) Anmeldenummer: 07819203.6
(22) Anmeldetag: 22.10.2007
(51) Int. Cl.: F27D 99/00

(54) **METALLURGISCHES GEFÄSS, INSBESONDERE LICHTBOGENOFEN**
METALLURGICAL VESSEL, IN PARTICULAR ARC FURNACE
RÉCIPIENT MÉTALLURGIQUE, EN PARTICULIER FOUR À ARC

(30) Priorität: 17.11.2006 DE 102006054344
(43) Veröffentlichungstag der Anmeldung: 02.09.2009
(73) Patentinhaber: SMS Siemag AG, 40237 Düsseldorf (DE)
(72) Erfinder: UEBBER, Norbert, 40764 Langenfeld (DE); KLEINSCHMIDT, Guido, 47447 Moers (DE); SCHLÜTER, Jochen, 44265 Dortmund (DE); FALKENRECK, Udo, 44797 Bochum (DE)
(74) Vertreter: Klüppel, Walter
(86) Internationale Anmeldenummer: PCT/EP2007/009139
(87) Internationale Veröffentlichungsnummer: WO 2008/058608

(56) Entgegenhaltungen:
- DE-A1- 1 508 154
- US-A- 3 129 930
- US-A- 4 653 730
- US-A- 4 730 336
- US-A1- 2003 075 843

## Beschreibung

Die Erfindung betrifft ein metallurgisches Gefäß, insbesondere einen Lichtbogenofen, mit einem Aufnahmebehälter für Metallschmelze und einem Deckel, mit dem der Aufnahmebehälter zumindest teilweise abgedeckt werden kann, wobei das metallurgische Gefäß weiterhin mindestens eine Lanze zur Zuführung eines Mediums in das metallurgische Gefäß aufweist, wobei die Lanze verschwenkbar am oder im metallurgischen Gefäß angeordnet ist und wobei die Lanze im Bereich des Deckels des metallurgischen Gefäßes an einem Drehgelenk angeordnet ist, das eine in horizontale Richtung gerichtete Drehachse aufweist.

Zur Unterstützung und Beschleunigung von Einschmelzvorgängen, zum Schäumen von Schlacke und zum Abbrand von Begleitelementen ist es bei metallurgischen Gefäßen dieser Art bekannt, Lanzen einzusetzen, mit denen ein Medium in den Reaktionsbereich des Ofens geleitet werden kann. Zumeist ist es Sauerstoff, der auf diese Weise zugeführt wird.

Für das Einbringen insbesondere von Sauerstoff in den Lichtbogenofenprozess zwecks Unterstützung und Beschleunigung des Einschmelzvorgangs, der Bereitstellung von Kohlenmonoxid zur Schaumschlackenbildung und des Abbrands, beispielsweise von Kohlenstoff und Phosphor, aus der Schmelze werden verschiedene Techniken eingesetzt. Zu nennen sind Türlanzen, die wassergekühlt oder selbstverzehrend sein können, feste Wandinjektoren, Seitenlanzen und Toplanzen.

Ein metallurgisches Gefäß der eingangs genannten Art ist aus der US 3 129 930 und aus der US 4 730 336 bekannt. Eine Lanze ist hier verschwenkbar außerhalb des Gefäßes gelagert und tritt durch eine Öffnung im Deckel des metallurgischen Gefäßes in dessen Inneres ein.

Ein ähnliches metallurgisches Gefäß ist aus der EP 0 048 007 B1 bekannt. Der dort beschriebene Ofen zum Einschmelzen von Metall weist in einer seiner Seitenwände eine Ausnehmung auf, durch die eine Sauerstoffblasdüse ins Ofeninnere hineinragt. Die Blasdüse ist an einer Gelenkstelle gelagert, die kugelkalottenförmig ausgebildete Elemente aufweist, womit es möglich wird, die Düse in ihrem Neigungswinkel einzustellen, um optimale Prozessbedingungen zu ermöglichen.

Auch in der DE 1 508 154 A1 ist eine solche Lösung offenbart, demnach eine in einer vertikalen Ebene schwenkbar angeordnete Lanzenführung für eine axial verschiebbare Lanze vorgesehen ist, wobei die Schwenkvorrichtung mit der Lanzenführung außerhalb des Ofenraums verbleibt. Die Schwenkvorrichtung erlaubt ein Verschwenken der Lanze um eine horizontale Achse, die außerhalb des Ofens liegt.

Ähnliche Lösungen sind in der EP 0 725 150 B1, in der DE 40 34 809 A1, in der DE 196 37 246 A1, in der US 2003/0075843 A1 und in der US 4,653,730 gezeigt. Die Lanzen zur Zuführung insbesondere von Sauerstoff sind stets außerhalb des Ofeninneren gelagert und ragen über eine Seitenwand ins Ofeninnere hinein. Weitere damit vergleichbare Lösungen offenbaren die DE 195 47 885 C1, die GB 887 168, die FR 2 489 841, die EP 0 418 656 B1 und die DE 27 38 291 C2.

Bei den vorbekannten Lösungen liegen unisono Nachteile - abhängig von der Bauart - vor: Bei Türlanzen kann der Prozess nicht bei geschlossenem Ofen gefahren werden, was energetische und metallurgische Nachteile zur Folge hat.

Beim Einsatz von Toplanzen ist ein separates Schwenkwerk nötig. Weiterhin kann in diesem Falle nicht simultan der Lichtbogen und die Toplanze betrieben werden.

Bei wandbasierten, wassergekühlten Lanzen ist eine Wanddurchführung erforderlich. Weiterhin besteht ein erheblicher Platzbedarf im Außenraum des Ofens. Zudem ist bei festen Wandinjektoren die Anpassbarkeit an unterschiedliche Schmelzenhöhenstände im Ofen nicht gegeben. Dies ist insbesondere bei der kontinuierlichen Förderung und Nutzung großer DRI-Mengen nachteilig. Bei zu kleinem Abstand zwischen der Düsenöffnung und der Schmelze besteht die Gefahr des Düsenzusetzens und des Feuerfestverschleißes durch zu tiefes Gaseindringen in das Schmelzenbad. Bei zu großem Abstand zwischen der Düsenöffnung und der Schmelze ist das Ausbringen von Sauerstoff zu gering.

Der Erfindung liegt daher die Aufgabe zugrunde, die vorstehenden Nachteile zu vermeiden und ein metallurgisches Gefäß, insbesondere einen Lichtbogenofen vorzuschlagen, bei dem ein Medium, insbesondere Sauerstoff bzw. ein Brennergas zur Erzeugung von Schaumschlacke, zum Abbrand von Begleitelementen bzw. zur Unterstützung des Einschmelzvorgangs in das Innere des Ofens während des Lichtofenbetriebs bei geschlossenem Gefäß eingebracht werden kann, wobei es möglich sein soll, die Austragöffnung der Lanze an die Höhe des Schmelzen- bzw. Schrottniveaus in einfacher Weise anzugleichen.

Die Lösung dieser Aufgabe durch die Erfindung ist **dadurch gekennzeichnet, dass** das Drehgelenk an der Innenseite des Deckels befestigt ist. Weiterhin kann vorgesehen sein, dass die Lanze wassergekühlt ist.

Die Lanze kann ferner gabelförmig ausgebildet sein und zwei, oder auch mehr, Austragbereiche aufweisen. In diesem Falle kann vorteilhaft vorgesehen werden, dass zwei gabelförmige Lanzen vorhanden sind, die an entgegengesetzten Stellen des Deckels in jeweiligen Drehgelenken gelagert sind. Die gabelförmige Lanze ist dabei mit Vorteil so angeordnet, dass die Austragbereiche beiderseits von mittig im Deckel angeordneten Elektroden zu liegen kommen.

Eine verbesserte Verteilung des eingetragenen Mediums kann erreicht werden, wenn zumindest einer der Austragbereiche der Lanze mehrere Düsen aufweist.

Weiterhin können Betätigungsmittel vorhanden sein, mit denen die mindestens eine Lanze in einer vorgebbaren Schwenkposition positioniert werden kann. Dabei ist es - wie noch näher erläutert werden wird - besonders vorteilhaft, wenn die Betätigungsmittel einen antriebsfreien Betriebsmodus aufweisen, in dem die Lanze durch ihr Eigengewicht auf dem aufzuschmelzenden Material im Ofeninneren aufliegt.

Schließlich sieht eine Weiterbildung vor, daß Messmittel vorhanden sind, mit denen der Schwenkwinkel der Lanze, insbesondere gegenüber der horizontalen Richtung, ermittelt werden kann.

Mit der vorgeschlagenen Ausgestaltung ist es möglich, eine dem Niederschmelzzustand und Badhöhenstand im Aufnahmebehälter angepasste und effiziente Nutzung von Sauerstoff und anderen Medien bei geschlossenem Ofengefäß sicherzustellen.

Hierzu wird beispielsweise die vorzugsweise wassergekühlte Lanze über ein Drehgelenk vertikal verschwenkbar unter dem Deckel des Lichtbogenofens positioniert, so dass sich die Lage des Düsenaustritts der Lanze bei geschlossenem Ofengefäß und unterschiedlichen Schmelzehöhenständen im Ofen anpassen lässt und damit ein optimaler Sauerstoffeintrag in die Schmelze gewährleistet ist. Darüber hinaus kann auch in der Niederschmelzephase des Schrotts die Lage des Düsenaustritts zur optimalen Unterstützung des Einschmelzvorgangs der Schrotthöhe angepasst werden.

Zur effizienteren Sauerstoffnutzung beim Niederschmelzen des Schrotts, zur Schaumschlackenbildung oder zum Entkohlen ist es von Vorteil, mehrere örtlich verteilte Sauerstoffeinträge zu nutzen, wie es oben weiterbildungsgemäß vorgeschlagen wurde. Hierfür kann eine Mehrfachlanze verwendet werden.

Neben einem Düsenaustritt für metallurgisch genutzten Sauerstoff an der Lanze besteht auch die Möglichkeit, statt des im Wesentlichen metallurgisch wirkenden Sauerstoffs oder zusätzlich zu diesem Brennergase mit dem hierzu notwendigen Sauerstoff zwecks Unterstützung des Niederschmelzvorgangs durch die Lanze zu führen und damit Brennerflammen in einer dem Schrotthöhenstand angepassten und damit wirtschaftlichen Weise zu betreiben.

Um die Wirksamkeit des Sauerstoffeintrags zu erhöhen und einen größeren Bereich der Schmelze zu erfassen, können die Lanzenköpfe mit mehreren Düsen bestückt werden, so dass mehrere verteilt angeordnete Sauerstoffausgabebereiche für die Schmelze vorliegen.

Um eine Indikation für die Schrotthöhe beim Niederschmelzvorgang zu erhalten, kann so vorgegangen werden, dass zu Beginn des Niederschmelzvorgangs die Lanze bzw. die Lanzen bis zur Auflage auf den Schrott abgesenkt werden, so dass sie dann mit ihrem einen Ende von der Schwerkraft beaufschlagt - auf dem Schrott weiter aufliegend - absinken. Der zu erfassende Schwenkwinkel am Drehgelenk ist dann ein Maß für den Schrotthöhenstand.

Die Erfindung erlaubt, dass ein dem Schmelzestand angepasster Sauerstoffbetrieb in einem geschlossenen Lichtbogengefäß ermöglicht wird. Das führt zu einer hohen energetischen und metallurgischen Effizienz des Prozesses. In analoger Weise können Brennerflammen am Düsenaustritt der Lanzen für den Niederschmelzvorgang des Schrotts genutzt werden.

In der Zeichnung sind Ausführungsbeispiele der Erfindung dargestellt. Es zeigen:
- Fig. 1: schematisch die Seitenansicht eines Lichtbogenofens mit teilweiser Darstellung der inneren Elemente des Ofens,
- Fig. 2: schematisch die Draufsicht auf den Ofen gemäß Fig. 1,
- Fig. 3: eine zu Fig. 1 analoge Darstellung mit einem ersten Füllgrad des O- fens mit Schmelze,
- Fig. 4: die Darstellung gemäß Fig. 3 mit einem zweiten Füllgrad des Ofens mit Schmelze,
- Fig. 5: eine zu Fig. 1 analoge Darstellung mit einem ersten Füllgrad des O- fens mit Schrott,
- Fig. 6: die Darstellung gemäß Fig. 5 mit einem zweiten Füllgrad des Ofens mit Schrott,
- Fig. 7: schematisch die Draufsicht auf den Ofen gemäß Fig. 1 gemäß einer ersten alternativen Ausgestaltung der Erfindung,
- Fig. 8: schematisch die Draufsicht auf den Ofen gemäß Fig. 1 gemäß einer zweiten alternativen Ausgestaltung der Erfindung, und
- Fig. 9: den Endbereich einer Lanze mit mehreren Düsen.

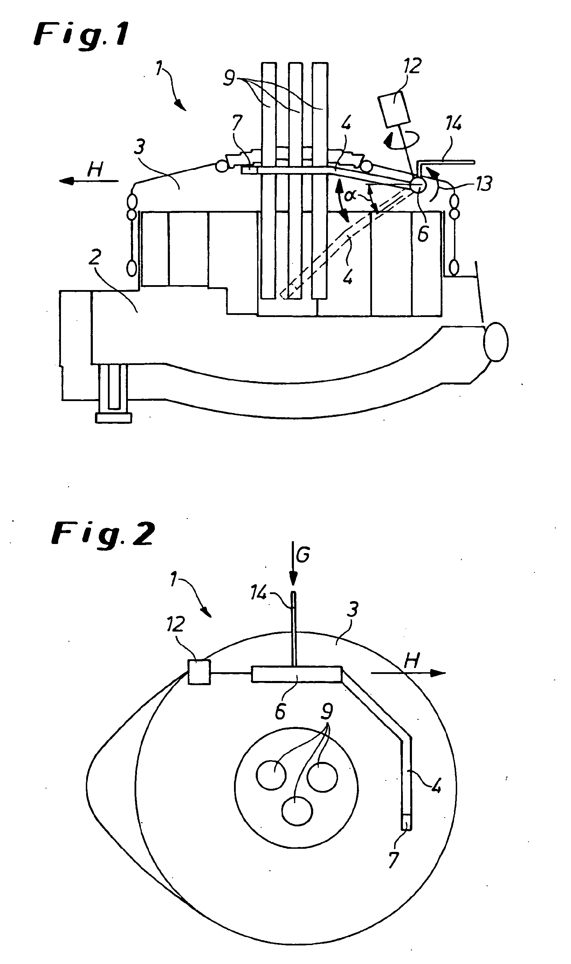

In den Figuren 1 und 2 ist ein metallurgisches Gefäß 1 in Form eines Elektro-Lichtbogenofens zu sehen, der einen Aufnahmebehälter 2 aufweist, der mit einem Deckel 3 verschlossen werden kann. Der Deckel 3 kann klappbar am Aufnahmebehälter 2 angeordnet sein, wie es als solches bekannt ist.

Um beim Aufschmelzen von Schrott z. B. Brennergas zuführen zu können oder bei der Stahlerzeugung der Schmelze Sauerstoff zugeben zu können, ist eine Lanze 4 vorgesehen, die wassergekühlt ist und an ihren der Schmelze zugewandten Seite einen Austragbereich 7 aufweist.

Die Lanze 4 ist dabei in einem Drehgelenk 6 gelagert, das an der Innenseite des Deckels 3 befestigt ist. Die Achse des Drehgelenks 6 erstreckt sich in horizontale Richtung H. Weiterhin sind Betätigungsmittel 12 vorgesehen, mit denen die Lanze 4 - gemessen beispielsweise gegenüber der Horizontalen H - um einen Winkel α geschwenkt werden kann. Die nach dem Schwenkvorgang tatsächlich vorliegende Winkellage der Lanze 4 wird mit Messmitteln 13 ermittelt, die in Fig. 1 nur sehr schematisch angedeutet sind, die aber als solche hinlänglich bekannt sind.

Zentral im Deckel 3 sind vorliegend drei Elektroden 9 angeordnet, über die der Lichtbogen erzeugt wird. Wie in Fig. 2 gesehen werden kann, ist die Lanze demgemäß gebogen ausgebildet, so dass sie kollisionsfrei mit den Elektroden 9 geschwenkt werden kann.

Bei Zufuhr eines Mediums G (z. B. Sauerstoff) über eine Zuführleitung 14 in die Lanze 4 tritt das Medium an der Austragstelle 7 wieder aus.

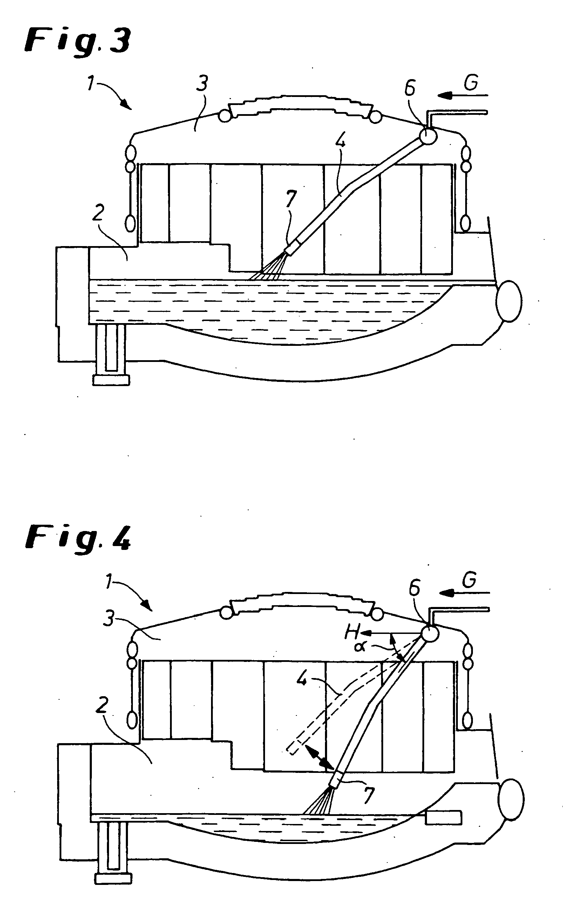

In der Zusammenschau der Figuren 3 und 4 ist zu sehen, wie eine Schwenkung der Lanze 4 erfolgen kann. In Fig. 3 liegt ein höherer Badspiegel der Metallschmelze im Aufnahmebehälter 2 vor als es bei Fig. 4 der Fall ist. Durch entsprechende Ansteuerung der Betätigungsmittel 12 (s. Fig. 1 und 2) durch eine nicht dargestellte Steuerung kann die Lanze 4 stets so positioniert werden, dass sich ein optimaler Abstand zwischen dem Austragbereich 7 und der Badspiegeloberfläche ergibt.

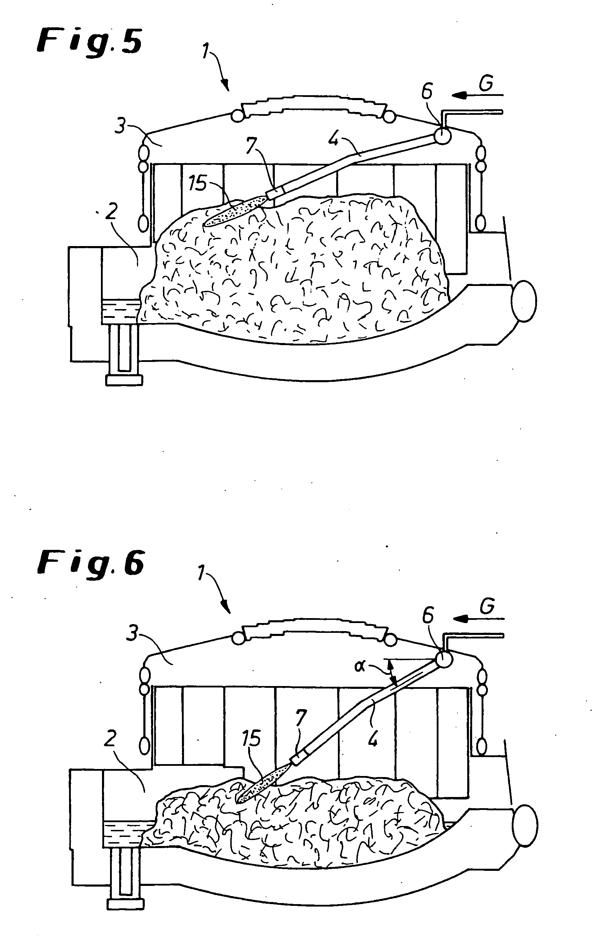

Entsprechend kann auch vorgegangen werden, wenn noch keine Schmelze im Aufnahmebehälter 2 vorliegt, sondern aufzuschmelzender Schrott. Dies ist in den Figuren 5 und 6 dargestellt. Zunächst wird die Lanze 4 mit ihrem Austragbereich 7 auf einem höheren Niveau gehalten, wie es in Fig. 5 zu sehen ist. Ist Schrott aufgeschmolzen, sinkt die Oberfläche des Schrotts ab, so dass die Lanze nach unten mitschwenkt. Hierbei kann vorgesehen werden, dass die Betätigungsmittel 12 passiv geschalten werden, so dass die Lanze 4 alleine durch ihr Eigengewicht auf dem Schrott aufliegt. In dem Maße, wie der Schrott aufschmilzt, sinkt damit die Lanze 4 ab. Angedeutet ist in den Figuren 5 und 6 die Brennerflamme 15, die vom Brennergas hervorgerufen wird.

Während bei der Ausführung gemäß den Figuren 3 und 4 zur Herstellung des Stahls Sauerstoff über die Lanze 4 zugeführt wird, ist gemäß Fig. 5 und 6 vorgesehen, dass der Aufschmelzvorgang durch die Zugabe von Brennergas unterstützt wird.

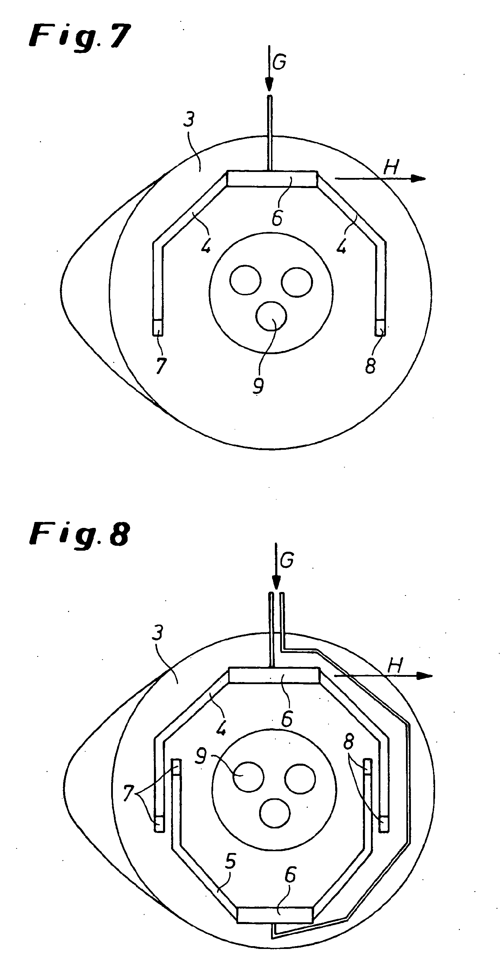

Die Wirksamkeit der Medienzugabe kann mit den in den Figuren 7 und 8 dargestellten Maßnahmen verstärkt werden.

In Fig. 7 ist die Lanze 4 gabelförmig ausgebildet; sie hat demnach zwei voneinander beabstandete Austragbereiche 7, 8. Diese sind so angeordnet, dass sie beiderseits der Elektroden 9 zu liegen kommen bzw. beiderseits der Elektroden 9 auf und nieder geschwenkt werden können.

Bei der in Fig. 8 dargestellten Lösung ist vorgesehen, dass zwei gabelförmige Lanzen 4 und 5 im Deckel 3 angeordnet sind, Damit kann über insgesamt vier Austragbereiche 7, 8 Medium G zugeführt werden. Die jeweiligen Gabelabstände sind dabei so gewählt, dass auch hier Kollisionsfreiheit sichergestellt ist.

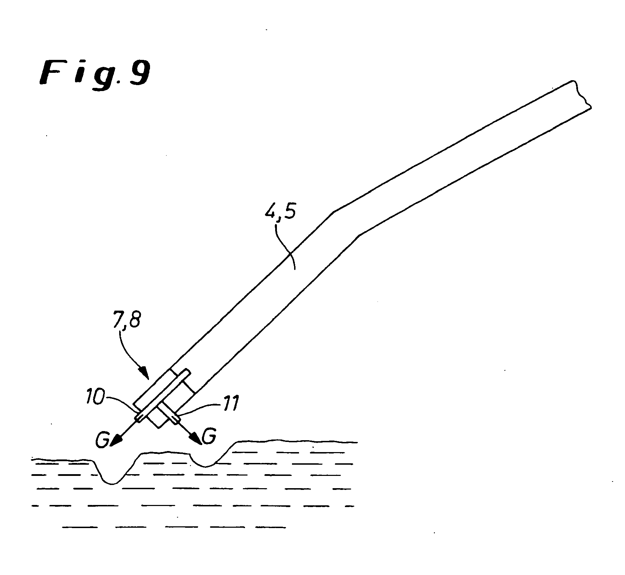

Um den Eintrag des Mediums G noch wirksamer zu machen und das Medium besser zu verteilen, ist gemäß Fig. 9 vorgesehen, dass der Austragbereich 7, 8 der Lanzen 4, 5 mehrere - hier: zwei - Düsen 10 und 11 aufweist.

### Bezugszeichenliste:

- 1: metallurgisches Gefäß
- 2: Aufnahmebehälter
- 3: Deckel
- 4: Lanze
- 5: Lanze
- 6: Drehgelenk
- 7: Austragbereich
- 8: Austragbereich
- 9: Elektrode
- 10: Düse
- 11: Düse
- 12: Betätigungsmittel
- 13: Messmittel
- 14: Zuführleitung
- 15: Brennerflamme

- H: horizontale Richtung
- α: Schwenkposition / Schwenkwinkel
- G: Medium (Gas, Sauerstoff, Brennergas)

## Patentansprüche

1. Metallurgisches Gefäß (1) mit einem Aufnahmebehälter (2) für Metallschmelze und einem Deckel (3), mit dem der Aufnahmebehälter (2) zumindest teilweise abgedeckt werden kann, wobei das metallurgische Gefäß (1) weiterhin mindestens eine Lanze (4, 5) zur Zuführung eines Mediums (G) in das metallurgische Gefäß (1) aufweist, wobei mindestens eine Lanze (4, 5) verschwenkbar am oder im metallurgischen Gefäß (1) angeordnet ist und wobei die Lanze (4, 5) im Bereich des Deckels (3) des metallurgischen Gefäßes (1) an einem Drehgelenk (6) angeordnet ist, das eine in horizontale Richtung (H) gerichtete Drehachse aufweist,
**dadurch gekennzeichnet,**
**dass** das Drehgelenk (6) an der Innenseite des Deckels (3) befestigt ist.

2. Metallurgisches Gefäß nach Anspruch 1,
**dadurch gekennzeichnet,**
**dass** die Lanze (4, 5) wassergekühlt ist.

3. Metallurgisches Gefäß nach Anspruch 1 oder 2,
**dadurch gekennzeichnet,**
**dass** die Lanze (4, 5) gabelförmig ausgebildet ist und zwei Austragbereiche (7, 8) aufweist.

4. Metallurgisches Gefäß nach Anspruch 3,
**dadurch gekennzeichnet,**
**dass** zwei gabelförmige Lanzen (4, 5) vorhanden sind, die an entgegengesetzten Stellen des Deckels (3) in jeweiligen Drehgelenken (6) gelagert sind.

5. Metallurgisches Gefäß nach Anspruch 3 oder 4,
**dadurch gekennzeichnet,**
**dass** die gabelförmige Lanze (4, 5) so angeordnet ist, dass die Austragbereiche (7, 8) beiderseits von mittig im Deckel (3) angeordneten Elektroden (9) zu liegen kommen.

6. Metallurgisches Gefäß nach einem der Ansprüche 1 bis 5,
**dadurch gekennzeichnet,**
**dass** zumindest einer der Austragbereiche (7, 8) der Lanze (4, 5) mehrere Düsen (10, 11) aufweist.

7. Metallurgisches Gefäß nach einem der Ansprüche 1 bis 6,
**dadurch gekennzeichnet,**
**dass** Betätigungsmittel (12) vorhanden sind, mit denen die Lanze (4, 5) in einer vorgebbaren Schwenkposition (α) positionierbar ist.

8. Metallurgisches Gefäß nach Anspruch 7,
**dadurch gekennzeichnet,**
**dass** die Betätigungsmittel (12) einen antriebsfreien Betriebsmodus aufweisen, in dem die Lanze (4, 5) durch ihr Eigengewicht auf dem aufzuschmelzenden Material im Ofeninneren aufliegt.

9. Metallurgisches Gefäß nach einem der Ansprüche 1 bis 8,
**dadurch gekennzeichnet,**
**dass** Messmittel (13) zur Ermittlung der Schwenkwinkel (α) der Lanze (4, 5) gegenüber der horizontalen Richtung (H) vorhanden sind.

10. Metallurgisches Gefäß nach einem der Ansprüche 1 bis 9,
**dadurch gekennzeichnet,**
**dass** es ein Lichtbogenofen ist.

## Claims

1. Metallurgical vessel (1) with a receiving container (2) for molten metal and a cover (3) by which the receiving container (2) can be at least partly covered, wherein the metallurgical vessel (1) further comprises at least one lance (4, 5) for the feed of a medium (G) into the metallurgical vessel (1), wherein at least one lance (4, 5) is pivotably arranged at or in the metallurgical vessel (1) and wherein the lance (4, 5) is arranged in the region of the cover (3) of the metallurgical vessel (1) at a swivel joint (6) having an axis of rotation oriented in horizontal direction (H), **characterised in that** the swivel joint (6) is fastened to the inner side of the cover (3).

2. Metallurgical vessel according to claim 1, **characterised in that** the lance (4, 5) is water-cooled.

3. Metallurgical vessel according to claim 1 or 2, **characterised in that** the lance (4, 5) is of fork-shaped construction and has two discharge regions (7, 8).

4. Metallurgical vessel according to claim 3, **characterised in that** two fork-shaped lances (4, 5), which are mounted at opposite places of the cover (3) in respective swivel joints (6), are present.

5. Metallurgical vessel according to claim 3 or 4, **characterised in that** the fork-shaped lance (4, 5) is so arranged that the discharge regions (7, 8) come to lie on both sides of electrodes (9) arranged centrally in the cover (3).

6. Metallurgical vessel according to any one of claims 1 to 5, **characterised in that** at least one of the discharge regions (7, 8) of the lance (4, 5) has several nozzles (10, 11).

7. Metallurgical vessel according to any one of claims 1 to 6, **characterised in that** actuating means (7) by which the lance (4, 5) is positionable in a predeterminable pivot position (α) are present.

8. Metallurgical vessel according to claim 7, **characterised in that** the actuating means (12) have a drive-free operating mode in which the lance (4, 5) rests by its own weight on the material, which is to be melted, in the furnace interior.

9. Metallurgical vessel according to any one of claims 1 to 8, **characterised in that** measuring means (13) for determining the pivot angle (α) of the lance (4, 5) relative to the horizontal direction (H) are present.

10. Metallurgical vessel according to any one of claims 1 to 9, **characterised in that** it is an arc furnace.

## Revendications

1. Récipient métallurgique (1) comprenant un réservoir récepteur (2) pour du métal en fusion et un couvercle (3) au moyen duquel le réservoir récepteur (2) peut être au moins partiellement recouvert, ledit récipient métallurgique (1) comprenant en outre au moins une lance (4, 5) pour l'apport d'un milieu (G) dans le récipient métallurgique (1), dans lequel au moins une lance (4, 5) est agencée avec possibilité de pivotement sur ou dans le récipient métallurgique (1), et la lance et agencée dans la zone du couvercle (3) du récipient métallurgique (1) sur une articulation rotative (6) qui comporte un axe de rotation orienté en direction horizontale (H),
**caractérisé en ce que**
l'articulation rotative (6) est fixée sur la face intérieure du couvercle (3).

2. Récipient métallurgique selon la revendication 1,
**caractérisé en ce que** la lance (4, 5) est refroidie à l'eau.

3. Récipient métallurgique selon la revendication 1 ou 2,
**caractérisé en ce que** la lance (4, 5) est réalisée en forme de fourche et comporte deux zones de distribution (7, 8).

4. Récipient métallurgique selon la revendication 3,
**caractérisé en ce qu'**il est prévu deux lances (4, 5) en forme de fourche, qui sont montées à des emplacements opposés du couvercle (3) dans des articulations rotatives (6) respectives.

5. Récipient métallurgique selon la revendication 3 ou 4,
**caractérisé en ce que** les lances (4, 5) en forme de fourche sont agencées de telle façon que les zones de distribution (7, 8) viennent se placer des deux côtés d'électrodes (9) agencées au milieu dans le couvercle (3).

6. Récipient métallurgique selon l'une des revendications 1 à 5,
**caractérisé en ce que** l'une au moins des zones de distribution (7, 8) des lances (4, 5) comprend plusieurs tuyères (10, 11).

7. Récipient métallurgique selon l'une des revendications 1 à 6,
**caractérisé en ce qu'**il est prévu des moyens d'actionnement (12) au moyen desquels la lance (4, 5) est susceptible d'être positionnée dans une position de pivotement prédéterminée (α).

8. Récipient métallurgique selon la revendication 7,
**caractérisé en ce que** les moyens d'actionnement (12) comporte un mode de fonctionnement exempt d'entraînement dans lequel la lance (4, 5) repose sous son propre poids sur le matériau à mettre en fusion à l'intérieur du four.

9. Récipient métallurgique selon l'une des revendications 1 à 8,
**caractérisé en ce qu'**il est prévu des moyens de mesure (13) pour déterminer l'angle de pivotement (α) de la lance (4, 5) par rapport à la direction horizontale (H).

10. Récipient métallurgique selon l'une des revendications 1 à 9,
**caractérisé en ce qu'**il s'agit d'un four à arc électrique.
